# EUROPÄISCHE PATENTANMELDUNG

(11) **EP 1 088 718 A2**
(43) Veröffentlichungstag der Anmeldung: **04.04.2001**
(21) Anmeldenummer: 00120108.6
(22) Anmeldetag: 19.09.2000
(51) Int. Cl.: B60S 1/34

(54) **Scheibenwischeranlage für Fahrzeuge**

(30) Priorität: 29.09.1999 DE 19946631; 29.09.1999 DE 19946632
(71) Anmelder: Volkswagen Aktiengesellschaft, 38436 Wolfsburg (DE)
(72) Erfinder: Ostrowski, Wolfgang, 38446 Wolfsburg (DE)

(57) **Zusammenfassung**

Die Erfindung betrifft eine Scheibenwischeranlage für Fahrzeuge, mit einer Wischerwelle zum pendelnden Antrieb eines Wischerarmes, die in einem Wischerwellenlager gelagert ist und einen Waschflüssigkeitskanal aufweist, der einerends eine Eingangsöffnung für die Waschflüssigkeit hat und andernends mit wenigstens einer Spritzdüse oder einer zu dieser führenden Leitung verbunden ist. Sie löst die Aufgabe, bei einer derartigen Scheibenwischeranlage den Übergang des Waschflüssigkeitsstromes an der Wischerwelle dicht und mit einfachen Mitteln zu gestalten. Dazu ist die Wandung (5) des Wischerwellenlagers (1) mit einer Öffnung (8) zur Zuführung der Waschflüssigkeit versehen, die in einen zwischen der Wandung (5) und der Wischerwelle (2) ausgebildeten und in axialer Richtung sowohl wischerarmseitig als auch antriebseitig geschlossenen Spalt (6) mündet, wobei die Eingangsöffnung (10) im Bereich des Spaltes (6) liegt. Bei einer im Abstand vom Waschflüssigkeitskanal (3) am Wischerarm (Spannteil 12), einem Spoiler oder am Wischerblatt vorgesehenen Spritzdüse ist der Übergang des Waschflüssigkeitsstromes zwischen dem Waschflüssigkeitskanal (3) und einer zur Spritzdüse führenden Leitung (Kanal 11) derart gestaltet, daß dieser eine Ausgangsöffnung (6) an der Mantelfläche der Wischerwelle (2) aufweist, die in einen axial abgedichteten Ringspalt (7) mündet, in dem auch die Eingangsöffnung (10) der Leitung (Kanal 11) liegt.

## Beschreibung

Die Erfindung betrifft eine Scheibenwischeranlage für Fahrzeuge, insbesondere Personenkraftfahrzeuge, bei der die Spritzdüsen für einen Waschflüssigkeitsauftrag zur Reinigung der jeweiligen Scheibe am Scheibenwischer angeordnet sind.

In zunehmendem Maße werden Scheibenwischeranlagen bekannt, bei denen die Spritzdüsen für einen Waschflüssigkeitsauftrag auf die Scheibe an dem aus einem Wischerarm und einem an diesem angeordneten Wischerblatt gebildeten Scheibenwischer angeordnet sind, um den Abstand der jeweiligen Spritzdüse zur Scheibe zu verringern und den Waschflüssigkeitsauftrag weitgehend unabhängig von der Fahrgeschwindigkeit und einer Windbeaufschlagung zu machen. Mit einer solchen Anordnung können die Sichtverhältnisse verbessert und der Waschflüssigkeitsverbrauch gesenkt werden, weil die Waschflüssigkeit definierter und gezielter eingesetzt wird. Überdies können durch die Verlagerung der Spritzdüse von der Karosserie, insbesondere der Motorhaube, auf den Scheibenwischer die Aerodynamik und das optische Erscheinungsbild des Fahrzeugs verbessert werden. Dabei gelangen bezüglich der Waschflüssigkeitszuführung zum Wischerarm Lösungen zum Einsatz, bei denen die jeweilige Wischerwelle für den Scheibenwischer zur Bildung eines Waschflüssigkeitskanals eine durchgehende Bohrung aufweist, durch den die Waschflüssigkeit zu einer am wischerarmseitigen Ende der Wischerwelle angeordneten Spritzdüse gefördert wird.

Die FR 2 735 735 offenbart eine Scheibenreinigungsanlage, bei der die Wischerwelle selbst als Waschflüssigkeitskanal ausgebildet ist. Bei einer vorgestellten Ausführung ist die Wischerwelle an ihrer fahrzeuginnenseitigen Stirnseite mit einem Zuführschlauch, der die Pendelbewegungen der Wischerwelle mit vollzieht, und wischerarmseitig mit einem radial angeordneten Auslaß verbunden, der mit einem am Wischerarm ausgebildeten Kanal korrespondiert, der wiederum mit wenigstens einer am Wischerarm angeordneten Düse verbunden ist. Die Lösung erfordert einen erhöhten Montageaufwand. Überdies ist die Beanspruchung des Zuführschlauches erhöht, denn dieser wird beim Betrieb der Scheibenwischeranlage ständig hin und her verdreht und somit torsionsbelastet.

Auch in der US 2 609 561 ist eine Lösung beschrieben, bei der an der fahrzeuginnenseitigen Stirnseite einer hohlen Wischerwelle ein flexibler Schlauch zur Zufuhr von Waschflüssigkeit angekoppelt ist, der beim Betrieb der Scheibenwischeranlage die Pendelbewegung der Wischerwelle mit vollzieht. An der wischerarmseitigen Stirnseite der Wischerwelle ist ein Düsenansatz mit einer Spritzdüse angeschraubt, der ebenfalls der Pendelbewegung der Wischerwelle folgt. In der Schrift ist auch eine Ausführung dargestellt, bei der in der hohlen Wischerwelle eine zusätzliche Röhre als Waschflüssigkeitskanal angeordnet ist, die drehfest am Wischerwellenlager gehaltert und Träger für die Spritzdüse ist, so daß diese die Pendelbewegung der Wischerwelle nicht mit vollzieht und eine ortsfeste Position zur Scheibe hat. Auch der angekoppelte Schlauch zur Zuführung von Waschflüssigkeit ist ortsfest. Die Lösung erfordert einen erhöhten Aufwand.

Weitere Lösungen, bei denen die Waschflüssigkeitszufuhr zur Spritzdüse über eine in einer hohlen Wischerwelle angeordnete und mit einem Schlauchanschlußstutzen versehene, nicht pendelnde Röhre erfolgt, sind mindestens aus der DE 35 21 024 C1, der DE 35 23 441 A1, der DE 39 07 962 A1, der DE 39 07 067 A1, der DE 40 28 127, der EP 0 413 800 B1 und der DE 195 33 848 A1 bekannt. Dabei ist es aus der DE 39 07 967 A1 auch bekannt, zur axialen Abdichtung eines Düsenkopfes gegenüber der Wischerwelle zwei 0-Ringe konzentrisch zu deren Achse hintereinander anzuordnen. Bei der Scheibenwischeranlage nach der DE 39 07 962 A1 ist zur Abdichtung eines Endstückes der Waschflüssigkeitszuleitung am Eingang zu dem in der Wischerwelle ausgebildeten Waschflüssigkeitskanal ein O-Ring als Radialdichtung eingesetzt.

Es ist Aufgabe der Erfindung, bei einer Scheibenwischeranlage für Fahrzeuge mit einem in der Wischerwelle ausgebildeten Waschflüssigkeitskanal nach dem Oberbegriff des Anspruchs 1 den Übergang des Waschflüssigkeitsstromes an der Wischerwelle dicht und mit einfachen Mitteln zu gestalten.

Diese Aufgabe wird bei einer Scheibenwischeranlage nach dem Oberbegriff des Anspruchs 1 bzw. 2 jeweils durch deren kennzeichnende Merkmale gelöst. Vorteilhafte Ausgestaltungen sind in den Unteransprüchen beschrieben.

Die Erfindung besteht dann, daß bei einer eine Wischerwelle zum pendelnden Antrieb eines Wischerarmes aufweisenden Scheibenwischeranlage mit einem in der Wischerwelle ausgebildeten Waschflüssigkeitskanal, der einerends eine Eingangsöffnung für die durch eine Pumpe geförderte Waschflüssigkeit hat und andemends mit wenigstens einer Spritzdüse oder einer zu dieser führenden Leitung verbunden ist, und mit einem an der Fahrzeugkarosserie festgelegten Wischerwellenlager die Waschflüssigkeitszuführung über die Wandung des Wischerwellenlagers erfolgt. Dazu ist die Wandung mit einer Öffnung zur Zuführung der Waschflüssigkeit versehen. Diese Öffnung mündet in einen zwischen der Wandung und der Wischerwelle ausgebildeten und in axialer Richtung sowohl wischerarmseitig als auch antriebseitig geschlossenen Spalt, und die Eingangsöffnung des Waschflüssigkeitskanals ist im Bereich des Spaltes angeordnet. Durch die Einleitung der Waschflüssigkeit in den Waschflüssigkeitskanal über das Wischerlager ist die Zuführleitung für die Waschflüssigkeit ortsfest und wird durch die pendelnde Bewegung der Wischerwelle nicht belastet. Die druckbeaufschlagte Waschflüssigkeit gelangt zunächst in den ausgebildeten Spalt und von diesem in die in dessen Bereich in einer Ebene senkrecht zur Achse der Wischerwelle hin und her bewegte Eingangsöffnung des Waschflüssigkeitskanals. Dabei genügt es, wenn der Spalt lediglich im Bereich der Pendelbewegung der Eingangsöffnung ausgebildet ist. Aus technologischer Sicht ist es jedoch vorteilhaft, den Spalt als Ringspalt am gesamten Wellenumfang auszubilden, insbesondere durch zwei im axialen Abstand am Wischerwellenlager angeordnete Lagerbuchsen. Die Waschflüssigkeit wird durch eine Leitung zum Wischerwellenlager geführt und vorteilhaft über einen an der Außenseite der Wandung des Wischerwellenlagers angeordneten Schlauchanschlußstutzen in dieses eingeleitet, wobei der Schlauchanschlußstutzen mit der Öffnung für die Zuführung der Waschflüssigkeit in den Spalt korrespondiert.

Der Flüssigkeitskanal ist aus technologischen Gründen bevorzugt axial ausgebildet und erstreckt sich vom Bereich des Spaltes bis wenigstens zum Anordnungsbereich des Wischerarmes, wobei es, ebenfalls aus technologischer Sicht, sinnvoll ist, diesen bis zum freien Ende der Wischerwelle auszubilden und dort einen Verschluß anzuordnen. Die Eingangsöffnung ist durch eine radial angeordnete Bohrung gebildet.

Anstelle eines Verschlusses kann am wischerarmseitigen Ende des Waschflüssigkeitskanals die Spritzdüse direkt angeordnet sein. Sie kann jedoch auch im Abstand vom Waschflüssigkeitskanal am Wischerarm, einem Spoiler oder am Wischerblatt vorgesehen sein. Für diesen Fall ist der Übergang des Waschflüssigkeitsstromes zwischen dem Waschflüssigkeitskanal und dem Eingang zur Spritzdüse bzw. zu einer zur Spritzdüse führenden Leitung dicht zu gestalten. Nach der Erfindung ist der Übergang derart gestaltet, daß der Waschflüssigkeitskanal mit einer Ausgangsöffnung an der Mantelfläche versehen ist, die im Bereich eines in axialer Richtung abgedichteten Ringspaltes liegt, der zwischen dem Wischerarm und der Wischerwelle ausgebildet ist, und daß im Wischerarm im Bereich des Ringspaltes die Spritzdüse oder die Eingangsöffnung der zur Spritzdüse führenden Leitung oder eines Kanals angeordnet ist.

Damit ist eine wenig aufwendige und verschlauchungsfreie Waschflüssigkeitsführung gegeben, die gleichzeitig mit der Montage des Wischerarmes an der Wischerwelle hergestellt ist. Die Dichtheit der Anordnung ist in jeder Winkelstellung des Wischerarmes an der Wischerwelle gegeben, so daß die Montage problemlos ist.

Der Ringspalt ist vorzugsweise zwischen einem am Wischerarm angeordneten Halterungsring und der Wischerwelle ausgebildet. Zur Abdichtung des Ringspaltes in axialer Richtung sind vorzugsweise zwei im axialen Abstand angeordnete Dichtungsringe vorgesehen, die den Spalt zwischen der Wischerwelle und dem Halterungsring in axialer Richtung waschflüssigkeitsdicht schließen.

Diese Dichtungsringe sind jeweils in einer aus technologischen Gründen bevorzugt an der Wischerwelle ausgebildeten und an den Querschnitt der Dichtungsringe angepaßten Ringnut angeordnet. Durch die Ringnuten wird der Sitz der mit dem Druck der Waschflüssigkeit beaufschlagten Dichtungsringe definiert, und zugleich wird die wellenseitige Abdichtung maximiert.

Die Ausgangsöffnung des aus technologischen Gründen vorteilhaft axial in der Wischerwelle angeordneten Waschflüssigkeitskanals ist in einer bevorzugten Ausführungsform radial ausgebildet.

Die Erfindung wird nachstehend anhand eines Ausführungsbeispieles beschrieben.

Die einzige zugehörige Zeichnung zeigt in einem Axialschnitt die in einem Wischerwellenlager 1 gelagerte Wischerwelle 2 einer Scheibenwischeranlage, in der ein Waschflüssigkeitskanal 3 ausgebildet ist (gestrichelt dargestellt). Die Wischerwelle 2 ist in zwei im axialen Abstand im Wischerwellenlager 1 fest angeordneten Lagerbuchsen 4 dichtend gleitgelagert. Diese (4), die Wischerwelle 2 und die Wandung 5 des Wischerwelenlagers 1 bilden einen Ringspalt 6 aus. In diesen Ringspalt mündet eine mit einem Schlauchanschlußstutzen 7 an der Außenseite der Wandung 5 korrespondierende Öffnung 8 zur Zuführung von Waschflüssigkeit. Der Waschflüssigkeitskanal 3 ist axial ausgebildet und reicht etwa von der Mündung der Öffnung 8 bis zum wischerarmseitigen Ende der Wischerwelle 2, an der dieser durch einen Kugelverschluß 9 dicht verschlossen ist. Der Waschflüssigkeitskanal 3 weist eine Eingangsöffnung 10 in axialer Höhe der Mündung der Öffnung 8 und eine Ausgangsöffnung 11 im Anordnungsbereich des Spannteils 12 eines angeordneten Wischerarmes auf, wobei diese Öffnungen 10 und 11 radial in der Wischerwelle 2 angeordnete Bohrungen sind.

Die Ausgangsöffnung 11 mündet in einen Ringspalt 13, der zwischen einem am Spannteil 12 ausgebildeten Halterungsring 14 und der Wischerwelle 2 durch zwei 0-Ringe 15 gebildet ist, die im axialen Abstand in jeweils einer an der Wischerwelle 2 ausgebildeten Ringnut 16 angeordnet sind. Die in diesen Ringspalt 13 mündende Ausgangsöffnung 11 korrespondiert dort mit einer im Halterungsring 14 angeordneten Eingangsöffnung eines zu einer Spritzdüse (nicht dargestellt) führenden Kanals 17.

Beim Betrieb des Scheibenwischers führt die Wischerwelle 2 eine Pendelbewegung um ihre Achse aus, durch die die Eingangsöffnung 10 hin und her bewegt und dabei an der Öffnung 8 vorbeibewegt wird. Im Gegensatz dazu verändert sich die Position der Ausgangsöffnung 11 gegenüber dem Kanal 17 nicht, da der Wischerarm 2 drehfest mit der Wischerwelle 2 verbunden ist (nicht näher dargestellt). Wird nun Waschflüssigkeit durch die Öffnung 8 zugeführt, dringt diese in den Ringspalt 6 und von diesem, unabhängig von der Stellung der Wischerwelle 2, über die Eingangsöffnung 10 in den Waschflüssigkeitskanal 3 und durch diesen und die Ausgangsöffnung 11 in den Ringspalt 13 und gelangt schließlich durch den Kanal 17 zur Spritzdüse.

### BEZUGSZEICHENLISTE

- 1: Wischerwellenlager
- 2: Wischerwelle
- 3: Waschflüssigkeitskanal
- 4: Lagerbuchse
- 5: Wandung
- 6: Ringspalt
- 7: Schlauchanschlußstutzen
- 8: Öffnung
- 9: Kugelverschluß
- 10: Eingangsöffnung
- 11: Ausgangsöffnung
- 12: Spannteil
- 13: Ringspalt
- 14: Halterungsring
- 15: 0-Ring
- 16: Ringnut
- 17: Kanal

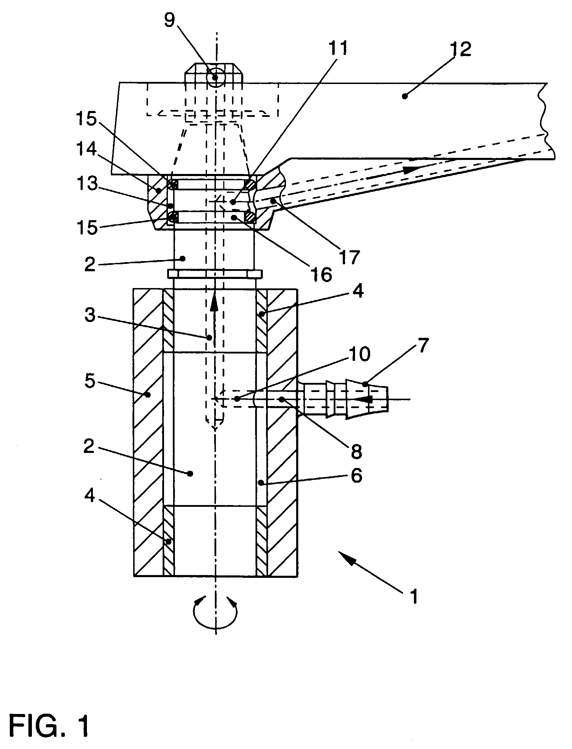

## Patentansprüche

1. Scheibenwischeranlage für Fahrzeuge, mit einer Wischerwelle zum pendelnden Antrieb eines Wischerarmes, die in einem Wischerwellenlager gelagert ist und einen Waschflüssigkeitskanal aufweist, der einerends eine Eingangsöffnung für die Waschflüssigkeit hat und andernends mit wenigstens einer Spritzdüse oder einer zu dieser führenden Leitung verbunden ist,
**dadurch gekennzeichnet**, daß
die Wandung (5) des Wischerwellenlagers (1) mit einer Öffnung (8) zur Zuführung der Waschflüssigkeit versehen ist, die in einen zwischen der Wandung (5) und der Wischerwelle (2) ausgebildeten und in axialer Richtung sowohl wischerarmseitig als auch antriebseitig geschlossenen Spalt (6) mündet, und daß die Eingangsöffnung (10) im Bereich des Spaltes (6) liegt.

2. Scheibenwischeranlage für Fahrzeuge, mit einer Wischerwelle zum pendelnden Antrieb eines Wischerarmes, die in einem Wischerwellenlager gelagert ist und einen Waschflüssigkeitskanal aufweist, der einerends eine Eingangsöffnung für die Waschflüssigkeit hat und andernends mit wenigstens einer Spritzdüse oder einer zu dieser führenden Leitung verbunden ist,
**dadurch gekennzeichnet**, daß
der Waschflüssigkeitskanal (3) eine Ausgangsöffnung (11) an der Mantelfläche der Wischerwelle (2) aufweist, wobei die Ausgangsöffnung (11) im Bereich eines in axialer Richtung abgedichteten Ringspaltes (13) liegt, der zwischen dem Wischerarm (Spannteil 12) und der Wischerwelle (2) ausgebildet ist, und daß im Wischerarm (Spannteil 12) im Bereich des Ringspaltes (13) die Spritzdüse oder die Eingangsöffnung (10) der Leitung (Kanals 17) angeordnet ist.

3. Scheibenwischeranlage nach Anspruch 1,
**dadurch gekennzeichnet**, daß
der Spalt (6) am gesamten Wellenumfang ausgebildet ist.

4. Scheibenwischeranlage nach Anspruch 1 oder 3,
**dadurch gekennzeichnet**, daß
der Spalt (6) durch zwei im Abstand am Wischerwellenlager angeordnete Lagerbuchsen (4) gebildet ist.

5. Scheibenwischeranlage nach Anspruch 1, 3 oder 4,
**dadurch gekennzeichnet**, daß
die Öffnung (8) zur Zuführung der Waschflüssigkeit mit einem an der Außenseite der Wandung (5) des Wischerwellenlagers (1) angeordneten Schlauchanschlußstutzen (7) korrespondiert.

6. Scheibenwischeranlage nach Anspruch 1,
**dadurch gekennzeichnet**, daß
der Waschflüssigkeitskanal (3) axial ausgebildet ist und sich vom Bereich des Spaltes (6) bis wenigstens zum Anordnungsbereich des Wischerarmes (12) erstreckt, und daß die Eingangsöffnung (10) durch eine radial angeordnete Bohrung gebildet ist.

7. Scheibenwischeranlage nach Anspruch 2,
**dadurch gekennzeichnet**, daß
der Ringspalt (13) zwischen einem am Wischerarm (Spannteil 12) angeordneten Halterungsring (14) und der Wischerwelle (2) ausgebildet und in axialer Richtung durch zwei im axialen Abstand angeordnete Dichtungsringe (15) begrenzt ist.

8. Scheibenwischeranlage nach Anspruch 3,
**dadurch gekennzeichnet**, daß
die Dichtungsringe (15) in jeweils einer an der Wischerwelle(2) ausgebildeten Ringnut (16) angeordnet sind.

9. Scheibenwischeranlage nach Anspruch 2,
**dadurch gekennzeichnet**, daß
der Waschflüssigkeitskanal (3) axial und die Ausgangsöffnung (11) radial in der Wischerwelle (2) ausgebildet sind.
